# EUROPEAN PATENT APPLICATION

(11) **EP 4 787 093 A1**
(43) Date of publication of application: **05.08.2026**
(21) Application number: 25218854.5
(22) Date of filing: 26.11.2025
(51) Int. Cl.: G05B 19/404, B23Q 17/09, G05B 19/4069, G05B 19/4097, G05B 19/4099

(54) **STABILITY OF MACHINING OF THIN-WALL PARTS**

(30) Priority: 29.01.2025 US 202519040447
(71) Applicant: RTX Corporation, Farmington, CT 06032 (US)
(72) Inventor: WANG, Zhigang, South Windsor, 06074 (US); GUO, Changsheng, South Windsor, 06074 (US); HOMMA, Kenji, Glastonbury, 06033 (US); KOUNTANYA, Rata K., Farmington, 06032 (US); RANGANATH, Santosh K., Glastonbury, 06033 (US); FROMERTH, Eric, Bolton, 06043 (US); SCHMITZ, Tony L., Knoxville, 37932 (US)
(74) Representative: Dehns

(57) **Abstract**

A method for machining a thin-walled part includes selecting a tool for machining a part; obtaining tool-based dynamics including tool-based frequency response; developing a preliminary tool path using the tool-based dynamics; simulating a machining process of the part with the preliminary tool path to produce an in-process model; developing a cut stock frequency response from the in-process model; determining stability lobes for machining the part with the tool, the stability lobes being determined from the tool-based frequency response and the cut stock frequency response; choosing operating parameters for a stable machining step from the stability lobes; and machining the part with the tool at the operating parameters.

## Description

### FIELD

The present disclosure relates to a system and method for stabilizing machining of thin-wall parts.

### BACKGROUND

Thin-wall parts are widely used in aerospace and defense industries due to their high strength-to-weight ratio. For example, turbine and compressor blades in aero engines and frame structures in flying vehicles and aircraft are typical thin-wall components. Machining of these parts can be challenging because of the likelihood of machining chatter and vibration due to low dynamic stiffness of the thin-wall part.

Chatter is undesirable frequency oscillation or vibration between a workpiece and a cutting tool during the machining process. Chatter or vibration in machining may result in excessive noise, bad surface quality of the workpiece, and tool breakage. As such, avoiding chatter during the machining process is of interest for meeting stringent part quality requirements in the aerospace industry.

Chatter can be avoided by properly choosing the machining process parameters such as depth of cut and spindle speed based upon the chatter diagram, also called chatter lobes, of the machining system. The chatter diagram is established mainly by analyzing the frequency responses of the cutter-holder-spindle system. This frequency response data is obtained by tap testing the cutters at their machining positions and orientations. For parts with stiffness higher than the cutter, empirical analyses such as the tap test method mentioned above work well. However, for thin-wall parts such as airfoils, the rigidity of the part is low, and can vary depending on where the machining process is applied on the part. Further, rigidity of the part may change significantly as material is removed from the part during the machining process. This problem can become more dominant during finishing operations. Variability in the rigidity of the part results in a corresponding change in its dynamic behavior as the machining progresses. Stable cutting conditions selected based on a chatter diagram established for one step are more likely to cause chatter for following steps. Therefore, the stable machining regions become a moving target as the machining progresses.

### SUMMARY OF THE DISCLOSURE

In one aspect, a method for machining a thin-walled part comprises selecting a tool for machining a part; obtaining tool-based dynamics including tool-based frequency response function; developing a preliminary tool path using the tool-based dynamics, the preliminary tool path defining a process model; simulating a machining process of the part with the preliminary tool path to produce an in-process stock model comprising a cut stock frequency response function of the part; determining stability lobes for machining the part with the tool, the stability lobes being determined from the tool-based frequency response function and the cut stock frequency response function; choosing operating parameters for a stable machining step from the stability lobes; and machining the part with the tool at the operating parameters.

In one non-limiting configuration, the preliminary tool path comprises selected tooling and cutting conditions.

In another non-limiting configuration, the method further comprises repeating the simulating step until the in-process stock model represents a complete operation.

In still another non-limiting configuration, the method further comprises exporting the process model to a virtual tap test simulation model for developing the in-process stock model.

In a further non-limiting configuration, the method further comprises exporting cut stock data to the virtual tap test simulation model.

In a still further non-limiting configuration, the virtual tap test simulation model identifies locations of interest for the part based upon the cut stock data, and performs a modal response analysis at the locations of interest.

In another non-limiting configuration, the virtual tap test simulation model is further configured to calculate a frequency response function from the modal response analysis, and to use the frequency response function to determine the stability lobes.

In still another non-limiting configuration, the frequency response functions of the in-process stock model include anticipated changes in frequency response function of the part during machining.

In a further non-limiting configuration, the operating parameters comprise a cutter RPM (revolutions per minute).

In a still further non-limiting configuration, the step of choosing the operating parameters comprises determining if there is a stable RPM available, and if not, returning to the selecting step to select a different tool.

In another non-limiting configuration, the method further comprises incorporating the operating parameter into the preliminary tool path.

In still another non-limiting configuration, there are a plurality of machining locations in the cut stock, and the method further comprises conducting the developing, determining and choosing steps for each of the machining locations, and incorporating resulting parameters into the preliminary tool path for each of the machining locations.

In a further non-limiting configuration, the method further comprises updating the preliminary tool path with the resulting parameters for each of the machining locations.

In a still further non-limiting configuration, the step of selecting the tool comprises selecting a cutter and a tool holder.

In another non-limiting configuration, the obtaining step comprises obtaining the tool-based dynamics by at least one of tap testing and receptance coupling substructure analysis.

In still another non-limiting configuration, the thin wall parts have curved surfaces.

In a further non-limiting configuration, the thin wall parts with curved surface are selected from the group consisting of fan blades, vanes and airfoils.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a typical thin-walled structure, in this non-limiting example a fan blade for a gas turbine engine;
FIG. 2 shows a typical stability lobe plot for a selected cutting apparatus;
FIG. 3 is a flow chart showing one disclosed embodiment of a method for determining a stability plot for machining thin-wall parts;
FIG. 4(a) illustrates machining stability lobes based upon cutter dynamics only;
FIG. 4(b) illustrates machining stability lobes based upon both cutter dynamics and workpiece dynamics;
FIG. 5(a) illustrates a demo part after a semi-finishing operation;
FIG. 5(b) illustrates a portion of a tool path plan for the demo part of FIG. 5(a);
FIG. 5(c) illustrates FRF at different stages of machining of the part of the demo part;
FIGS. 6(a)-(d) illustrate identified frequency responses at four different identified locations including simulated and measured results.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

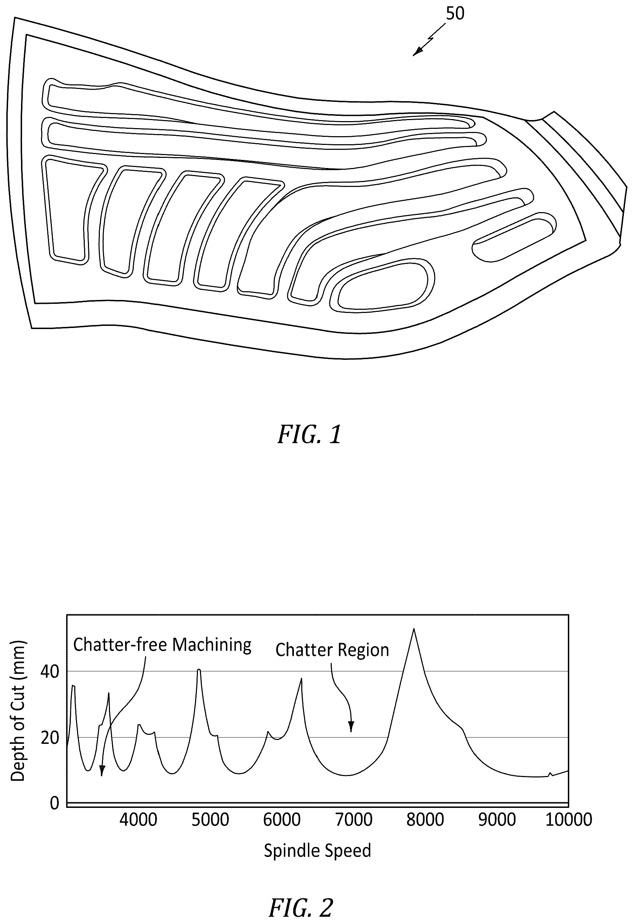

FIG. 1 illustrates a typical non-limiting example of a thin wall part 50, in this case a fan blade for a gas turbine engine. Such a fan blade is typically machined down to very thin walls, for example walls having a thickness between 0.012" and 0.120" (0.305 and 3.05 mm). The fan blade of FIG. 1 can be machined with contours and cooling passages as shown, and this typically is done to produce very thin walls to reduce weight as much as possible, among other reasons. As discussed above, machining of the walls of this component involves machining a part having rigidity that is less than that of the cutting tool such as the cutter-holder-spindle system. When machining such a thin wall component, the part itself adds chatter, and the zones of chatter change as material is removed while machining progresses. Thus, without taking the thin walls of the part, or cut stock, into account, it is likely that chatter will occur that can cause excessive noise and damage the surface of the component and/or the cutter or tool itself. In addition, thin wall parts may have curved surfaces which can lead to added complexity in machining without chatter. Examples of suitable thin wall parts with curved surfaces include but are not limited to fan blades, vanes and airfoils. Of course, it will be appreciated that numerous other industrial components can advantageously be made with thin walls, and in many instances the method of choice will include machining. Therefore, it will be appreciated that the fan blade of FIG. 1 is only a non-limiting example of a component with which the disclosed method can be implemented.

When machining a component or part, once a suitable tool is selected, such as for example a cutter, such tools typically have known stability lobe plots which show areas of stable or chatter-free machining. FIG. 2 shows a typical stability lobe plot for a cutter on a spindle, and the x-axis shows spindle speed or RPMs while the y-axis shows the depth of cut, for example in millimeters (mm). The plot or curve divides areas of stable or chatter-free machining below the curve, and a chatter region above the curve. At lower depths of cut, a greater range of spindle speeds is available in a stable region. If a deeper cut is desired, then there are lobes or ranges of spindle speeds that remain stable at greater depths, such as, for example, approximately 7,900-8,000 rpm in the plot of FIG. 2. Thus, for stable machining, machining parameters such as depth and spindle RPM are selected to have a condition that is beneath the curve of the stability lobe plot.

Plots such as that of FIG. 2 are generally suitable when the part to be machined is more rigid than the cutter/holder/spindle system of the tool. This is because the plot (such as FIG. 2) already takes into account the source of potential chatter. For thin wall parts such as the fan blade of FIG. 1, however, there is an added dynamic that can result in chatter even if operating within a chatter free region based upon the cutter or tool-based dynamics of FIG. 2.

Determining the chatter region based upon the thin-walled part to be machined, or cut stock, is challenging due to the fact that the cut stock dynamics change as the part is machined due to the removal of material. As disclosed herein, a method is disclosed for establishing stable machining conditions for thin wall structures by considering variable dynamics of in-process workpiece models. Virtual machining simulation and dynamics modeling of the in-process workpiece are used to estimate the dynamic characteristics of the workpiece as material is being removed.

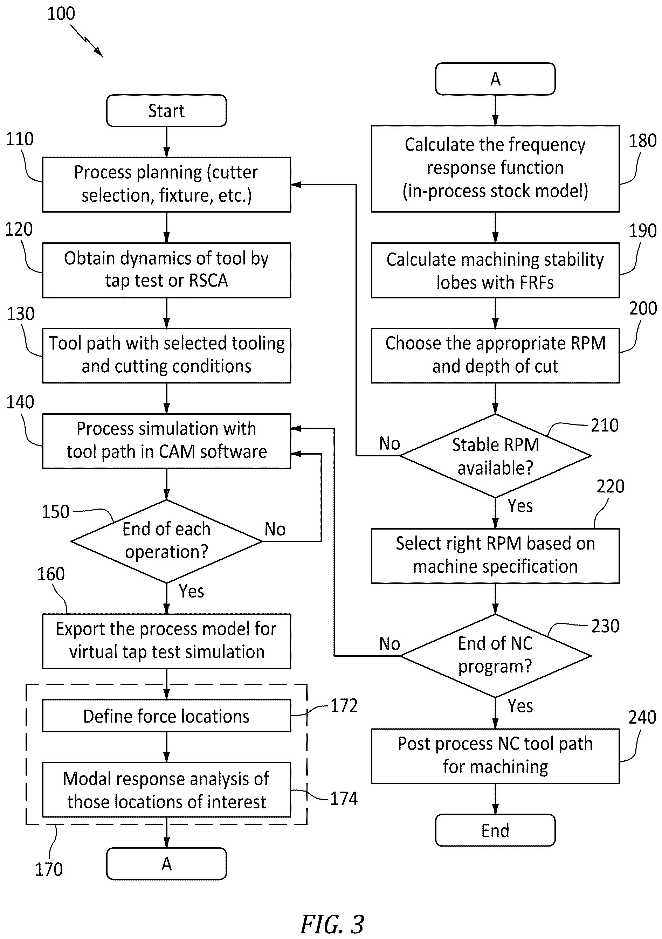

Referring to FIG. 3, a method is illustrated for determining stability lobes of a process based upon both tool-based frequency response as well as cut stock frequency response.

In FIG. 3, the method 100 comprises a series of steps starting with a first step 110 of planning the process. In this step, a selection is made of the machine for the machining job, as well as the cutters and tool holders or fixtures to be used, for example. The tooling or machine would be selected as appropriate for the part to be machined, and it is possible that more than one tool or machine would be suitable. Thereafter, the tool path strategies are defined based on the shape or features of the part to be machined as well as the suitable axial and radial depth of cut for each selected tool. This can be relevant later in the method.

With the selected tools or machine, in step 120, the dynamics or frequency responses for each of the cutter-holder-spindle combinations can be obtained. This can be done either by the receptance coupling substructure analysis (RCSA) method or tap testing the cutters mounted in the tool holder and spindle and positioned at its machining location and orientation. This step can also be done using modeling by performing modal analysis of the cutter-holder-spindle assembly. As a further alternative, specific tools or machines may have already-determined stability lobe plots such as that shown in FIG. 2, and this information can be readily available or calculated/estimated using any of these methods, or combinations thereof. The frequency responses represent the actual or estimated dynamics of the tool or machining system.

With the tool-based dynamics, in step 130, a preliminary numerically-controlled (NC) tool path can be determined in a number of different ways that are known to persons skilled in the art, for example using standard commercial computer assisted manufacturing (CAM) software such as NX, Mastercam, SolidCAM, HyperMill, etc., all of which are trademarks for such commercial software that are well known to persons skilled in the art.

In step 140, a process simulation can be conducted which can involve virtual machining under computer assisted manufacturing (CAM) and export of information regarding the cut stock for the machining step and/or locations where relatively equivalent or even lower stiffness less than the cutter stiffness is expected. The cut stock as referred to herein is the part geometry.

In some instances, this step is conducted in a semi-finishing step and/or during the finish machining steps, but can also be conducted for roughing steps, for example even where the workpiece has relatively high stiffness.

At this stage, at step 150, the process simulation just completed is added to the accumulated operation data, and a check is made to see if the end of operation has been reached. If no, step 140 can be conducted with the next step of the process, in a loop that continues until the end of operation is reached.

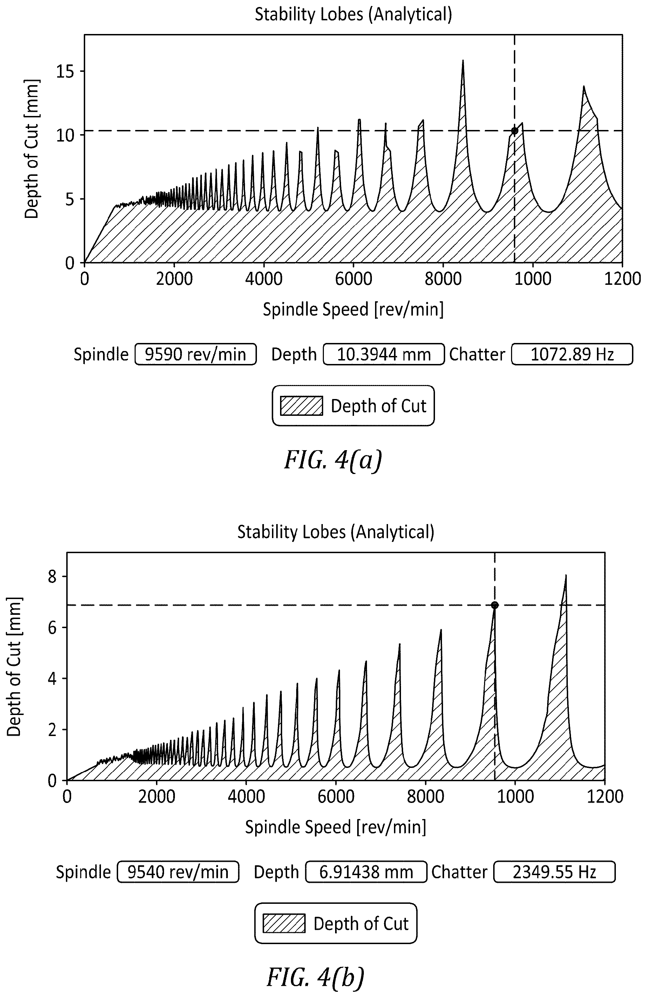

Once the end of operation is reached (the answer to step 150 is yes), step 160 outputs a process model which represents the vibration frequency model for machining the part based at this stage only on the properties of the tool. This is the beginning of adapting the process function for properties of the thin wall part or cut stock. The process model can then be exported for use in evaluating vibration frequency of the part over time, and this leads to an in-process stock model that is also used as disclosed herein to determine a suitable operating parameter for thin-walled parts that does not lead to excessive chatter. This is done by performing modal analyses of the cut stock under finite element software such as OptiStruct, ANSYS, Abaqus, etc., or the like, to identify areas or locations of interest, followed by a virtual tap simulation at those locations as explained in FIGS. 4(a) and (b) discussed below. Modal analysis or determining modal response is the total or as near as possible to total response of a structure to external forces, as a result of the excitation of its different modes. Such analysis and the determining of the modal response are functions that are well understood to the person having ordinary skill in the art.

A virtual tap test or simulation refers to a simulated test where a computer model is used to analyze the vibrational response of a structure by applying a virtual "tap" or impact force, allowing for the evaluation of its structural integrity and potential vibration issues without physically hitting the real object, essentially creating a digital representation of a traditional tap test using specialized software and analysis tools. Such virtual tap testing is understood by persons having ordinary skill in the art.

In step 160, the process model including the tool dynamics is exported to a sub-process 170 wherein the first step is to define force locations in the cut stock or workpiece that are of interest for chatter during machining in step 172, and then a modal response analysis of those locations of interest is carried out in step 174. This information is passed to step 180 where a frequency response function (FRF) is calculated. This FRF can then be used in step 190 to calculate machining stability lobes and/or a machining dynamic diagram, which now reflects both the tool-based dynamics or frequency response as well as the cut stock frequency response. In step 200, an appropriate spindle speed or RPM as well as cut depth can be selected, if one is available. This decision is shown at step 210, where if there is a suitable RPM available based upon the machine specification, this is chosen in step 220. If the answer in step 210 is "No", then the process returns to step 110 with the selection of a different tool, for example a stiffer cutter, and/or to reduce the given depth of cut from process planning, and then go back to step 110.

Assuming a stable RPM is available, it is incorporated into the numerically controlled (NC) tool path developed in step 130, and the process then returns to step 140 to continue developing the NC tool path for the subsequent machining locations/steps. This decision is made at step 230, where if the NC program is not yet finished, the process returns to step 140 as discussed above. If the NC program is complete, that is, the end of the program has been reached, the in step 240 the process NC tool path for machining the intended work piece can be posted for use, and the process comes to an end.

Once the complete NC tool path has been generated, at this stage the NC tool path is ready to be used to guide machining of parts as desired.

In the method representation of FIG. 3, steps 160-180 take the process model including tool data, and part data containing dimensions and material of the part, generate an in-process stock model representing frequency response of the part or cut stock during the intended machining process. This can be done by exporting the process model and cut stock data to a virtual tap test simulation model for developing the in-process stock model. The virtual tap test simulation model identifies locations of interest for the part based upon the cut stock data, and performs a modal response analysis at the locations of interest. The virtual tap test simulation model can be configured to calculate a frequency response function of the part, over time during the machining process, from the modal response analysis. This frequency response function can then be used to determine the stability lobes.

Again, the frequency response functions of the in-process stock model include anticipated changes in frequency response function of the part during machining, and therefore allow estimation of stability lobes either as a function of time, or that represent areas of stability from beginning to end of the intended machining process.

Turning now to FIGS. 4(a) and 4(b), a comparison is presented of a stability lobe chart considering only tool-based dynamics or frequency response (FIG. 4(a)), and an adjusted stability lobe chart considering both tool-based dynamics or frequency response as well as cut stock or part frequency response or dynamics, based upon the time of the process and including changes in the part dynamics as material is removed, this being presented as a frequency response function (FIG. 4(b)). Put a different way, FIG. 4(a) illustrates stability lobes based only upon the machine data or process model, while FIG. 4(b) illustrates stability lobes taking into account both machine and part frequency response, that is, talking into account both the process model and the in-process stock model. As can be seen in these figures, while the average cutting depth that can be used for stable machining is substantially lower in FIG. 4(b), there are lobes where similar cutting depth can be implemented and still remain stable, for example at about 975 rev/min or rpm. Thus, by following the disclosed method to combine tool and cut stock or part dynamics, including changes of cut stock or part dynamics as a function of time as machining progresses, reasonable process parameters can be determined that allow efficient and stable machining of the parts, even thin wall parts which might otherwise cause instability and chatter in the machining process.

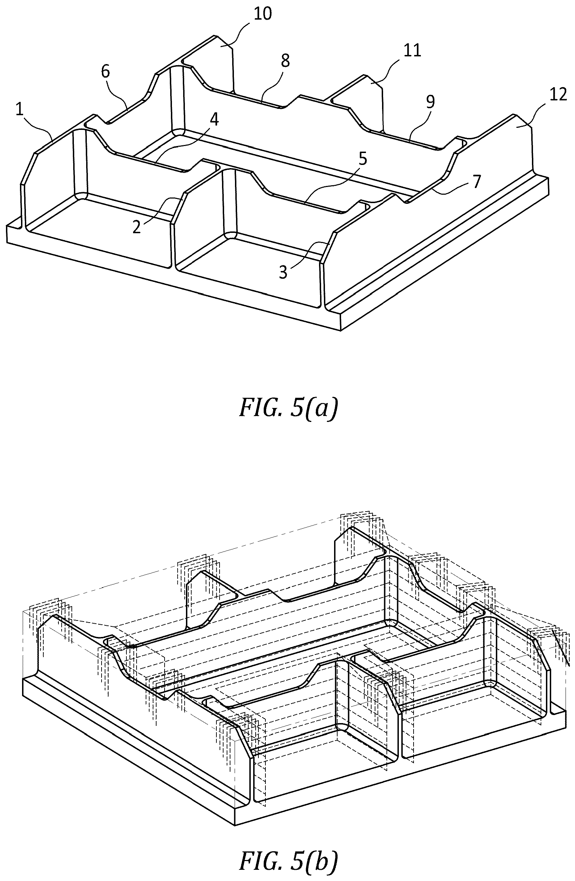

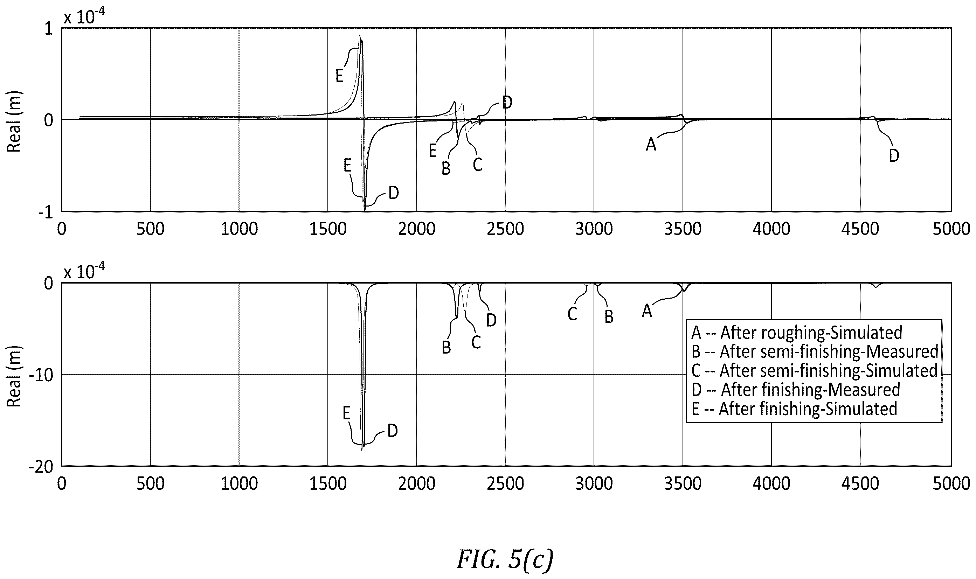

An example of a thin wall part is shown in FIG. 5(a), and a portion of a tool path diagram for this part is shown in FIG. 5(b). The part in question has a relatively flat base with a series of somewhat interconnected upstanding walls. These walls are to be machined and are thin enough that they have less stiffness than the tool to be used for the machining. Areas of the part identified at points 1-12 in FIG. 5(a) are considered as to whether they have less stiffness than the tool/holder/spindle to be used for the machining, and in this case locations 2, 3, 5 and 7 are identified as areas of interest for low stiffness. The effect of material removal and cutter location at multiple cutting steps and locations on workpiece dynamics and process stability was modeled. The process model from the CAM simulation based upon the tool paths shown in FIG. 5(b) can be exported for virtual tap test simulations for the part to be machined. At this stage, (step 160, FIG. 3), virtual tap testing is used to generate the frequency response function (FRF) of the part to be machined as an output. This simulation is done over a virtual simulation of the process, taking into account changes in part dynamics due to removal of material, and the result is an in-process stock model or frequency response function (step 180, FIG. 3). This FRF, or in-process stock model, coupled with the dynamics or frequency response from the tool (or process model), can then be used to predict stability lobes such as those shown in the plot of FIG. 4(b), which represent stability lobes based upon tool frequency response and also the dynamic cut-stock frequency response. During this experiment, after a semi-finishing operation, tap tests were performed to verify the simulated FRF at those locations of interest, with lower stiffness, as identified in the numbered locations of FIG. 5(a). FIG. 5(c) shows the comparison of actual tap testing versus the virtual predicted response frequencies. As can be seen, these are largely the same. It should be appreciated that the virtual or imaginary data (lower portion of FIG. 5(c) can be all negative or positive depending on the direction of the response/output vs impact/input. The results shown in FIG. 5(c) are for cases with input and output along the same direction.

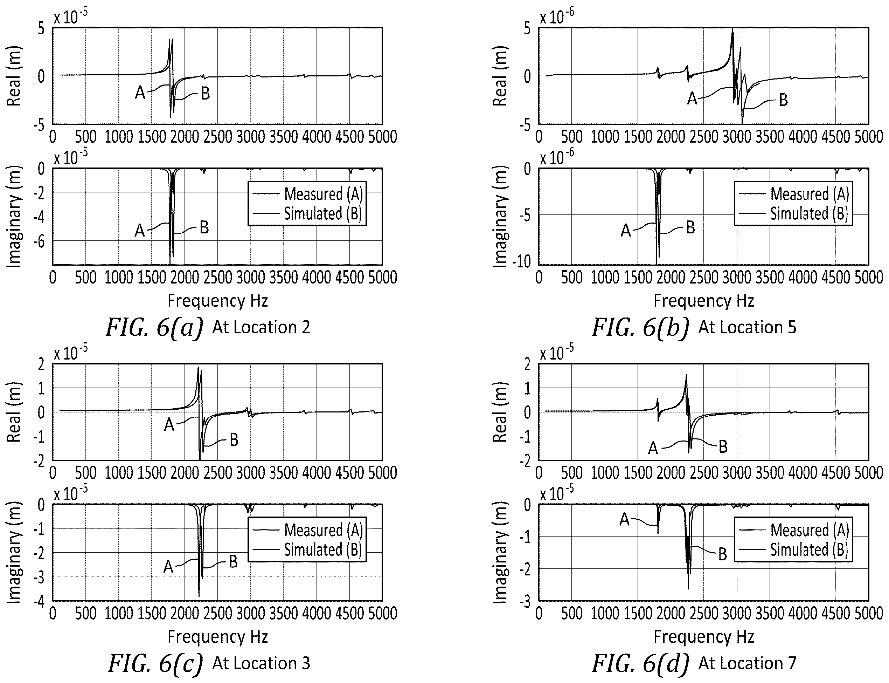

As mentioned above, part locations **2, 3,** 5 and 7 were selected as of interest in the example for the part of FIGS. 5(a) and (b). Note that because the part is symmetric in the XY plane, only 4 locations were needed to represent the locations of interest. FIGS. 6(a)-(d) show real and imaginary data for each of these locations. It can be seen that the real data closely tracks the imaginary data, thus confirming that the prediction model of the present disclosure is effective in modeling workpiece or cut stock dynamics.

Returning to FIG. 5(c) it is noted that data is represented for the process after roughing, after semi-finishing and after finishing, as simulated and as measured. As shown, clearly the part dynamics change as machining progresses, and this frequency response function (of the cut stock) based data helps to predict suitable process or machining parameters to maintain stability throughout the machining. Here also the virtual data tracks well with the real data.

In connection with the tool selection, a typical example of a suitable machining system including cutter, spindle and holder, in one non-limiting embodiment could be a 5-axis machining center and ball end mill cutter with long stick out length. Of course, numerous other machining system configurations would be known to persons skilled in the art and readily useful within the broad scope of this disclosure.

The cut stock to be worked on can, as mentioned above, be any type of component for example for use in the aerospace industry, where thin wall structures are useful, for example due to light weight and high strength, with particular focus on such cut stock or workpieces that have thin walls or other components that have a stiffness less than or equal to that of the tool. Such cut stock can typically be made from any material that could suitably be machined, and preferably a light weight metallic or alloy material, such as aluminum or titanium alloys, nickel-based alloys, etc., and the like.

As noted above, the in-process stock model can be determined for a specific part over time first by a virtual tap test simulation using in-process stock model, and then can be confirmed through actual tap testing, also as noted above.

It should be appreciated that the methods as disclosed herein provide for fast and cost-effective development of robust milling processes for flexible parts, which result in better part quality, improved tool life, lower cost, a more reliable and stable process and numerous other benefits.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. A method for machining a thin-walled part (50), comprising:
selecting a tool for machining a part (50);
obtaining tool-based dynamics including tool-based frequency response function;
developing a preliminary tool path using the tool-based dynamics, the preliminary tool path defining a process model;
simulating a machining process of the part (50) with the preliminary tool path to produce an in-process stock model comprising a cut stock frequency response function of the part;
determining stability lobes for machining the part (50) with the tool, the stability lobes being determined from the tool-based frequency response function and the cut stock frequency response function;
choosing operating parameters for a stable machining step from the stability lobes; and
machining the part (50) with the tool at the operating parameters.

2. The method of claim 1, wherein the preliminary tool path comprises selected tooling and cutting conditions.

3. The method of claim 1 or 2, further comprising repeating the simulating step until the in-process stock model represents a complete operation.

4. The method of any preceding claim, further comprising exporting the process model to a virtual tap test simulation model for developing the in-process stock model.

5. The method of claim 4, further comprising exporting cut stock data to the virtual tap test simulation model.

6. The method of claim 5, wherein the virtual tap test simulation model identifies locations of interest (1-12) for the part (50) based upon the cut stock data, and performs a modal response analysis at the locations of interest (1-12).

7. The method of claim 6, wherein the virtual tap test simulation model is further configured to calculate a frequency response function from the modal response analysis, and to use the frequency response function to determine the stability lobes.

8. The method of claim 7, wherein the frequency response functions of the in-process stock model include anticipated changes in frequency response function of the part during machining.

9. The method of any preceding claim, wherein the operating parameters comprise a cutter RPM (revolutions per minute).

10. The method of claim 9, wherein the step of choosing the operating parameters comprises determining if there is a stable RPM available, and if not, returning to the selecting step to select a different tool.

11. The method of any preceding claim, further comprising incorporating the operating parameters into the preliminary tool path.

12. The method of claim 11, wherein there are a plurality of machining locations in the cut stock, and further comprising conducting the developing, determining and choosing steps for each of the machining locations, and incorporating resulting parameters into the preliminary tool path for each of the machining locations, optionally wherein the method further comprises updating the preliminary tool path with the resulting parameters for each of the machining locations.

13. The method of any preceding claim, wherein the step of selecting the tool comprises selecting a cutter and a tool holder.

14. The method of any preceding claim, wherein the obtaining step comprises obtaining the tool-based dynamics by at least one of tap testing and receptance coupling substructure analysis.

15. The method of claim 1, wherein the thin wall parts (50) have curved surfaces, optionally wherein the thin wall parts (50) with curved surface are selected from the group consisting of fan blades (50), vanes and airfoils.
